# FASCICULE DE BREVET EUROPEEN

(11) **EP 0 543 750 B1**
(45) Date de publication et mention de la délivrance du brevet: **20.12.1995**
(21) Numéro de dépôt: 92420427.4
(22) Date de dépôt: 19.11.1992
(51) Int. Cl.: A47J 36/10, A47J 27/08

(54) **Dispositif de verrouillage-déverrouillage d'un couvercle pour appareil de cuisson**
Ver- und Entriegelungsvorrichtung für den Deckel eines Kochgerätes
Lid locking and unlocking device for cooking vessels

(30) Priorité: 21.11.1991 FR 9114602
(43) Date de publication de la demande: 26.05.1993
(73) Titulaire: SEB S.A., 69130 Ecully (FR)
(72) Inventeur: Beugnot, Bernard Jacques, F-21120 Is sur Tille (FR)

(56) Documents cités:
- DE-C- 342 945
- DE-C- 840 967
- FR-A- 475 339
- FR-A- 1 208 147
- FR-A- 2 658 162
- GB-A- 2 151 128
- NL-C- 79 564
- US-A- 3 406 997

## Description

La présente invention se rapporte au domaine technique général des dispositifs de verrouillage-déverrouillage et plus précisément au domaine technique spécifique relatif aux dispositifs employés pour assurer la fermeture et l'ouverture de récipients sous pression.

La présente invention concerne en conséquence un dispositif de verrouillage-déverrouillage du couvercle d'un appareil de cuisson par rapport à sa carrosserie, et s'applique plus particulièrement, mais non exclusivement, aux appareils de cuisson à vapeur ou produisant de la vapeur durant le cycle de cuisson.

Des dispositifs du type mentionné ci-dessus doivent assurer, non seulement une fonction de verrouillage-déverrouillage, mais aussi, être d'un maniement simple, sûr et ne présenter aucun danger pour l'utilisateur, tel que celui par exemple de renverser le récipient au moment ou pendant l'opération de verrouillage-déverrouillage. De tels impératifs de sécurité sont d'autant plus importants dans le cas d'ouverture d'un couvercle coiffant un récipient susceptible de contenir de la vapeur sous pression.

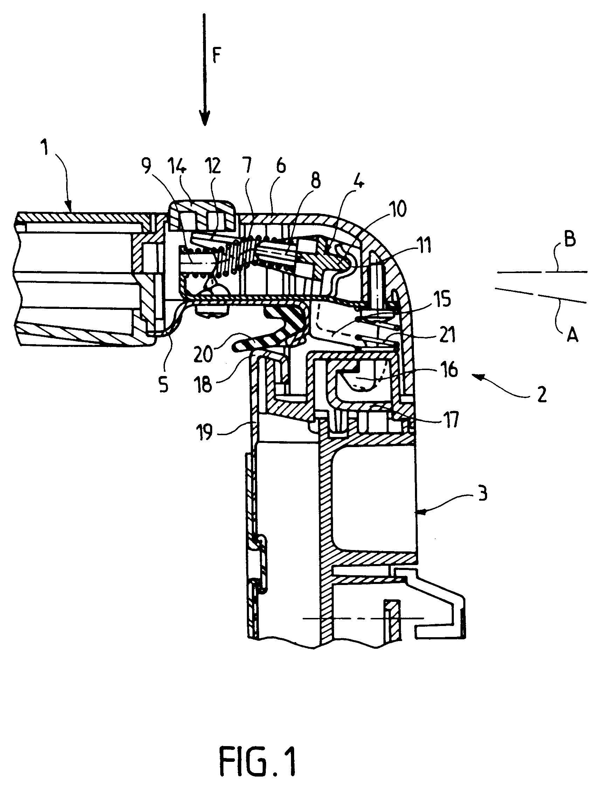

Il existe de nombreux dispositifs de verrouillage-déverrouillage du couvercle d'appareils de cuisson, et la figure 1 représente un dispositif connu de l'art antérieur. Ce dispositif est destiné au verrouillage-déverrouillage du couvercle 1 d'un récipient 2 sur sa carrosserie externe 3. Le dispositif représenté comporte une pièce de basculement 4 logée dans l'épaisseur du couvercle 1 entre sa paroi interne 5 et sa paroi externe 6 et maintenue en position élastique stable de verrouillage tel que cela est montré à la figure 1 par un ressort de compression 7 interposé entre un téton 8 de la pièce de basculement 4 et un contre-téton 9 solidaire du couvercle 1. La pièce de basculement 4 est montée à basculement dans le couvercle 1 par l'intermédiaire d'une languette 10 insérée avec jeu dans une gorge 11 solidaire du couvercle 1. La pièce de basculement 4 comporte également une branche d'actionnement 12, s'étendant au droit d'une ouverture ménagée à travers la paroi externe 6. Par convention, le plan de symétrie de la branche d'actionnement 12 définit, tel que cela est montré à la figure 1, la position de verrouillage de la pièce de basculement référencée par la ligne A, et la position de déverrouillage, référencée B. Un bouton d'actionnement 14 est disposé dans l'ouverture en contact avec la branche d'actionnement 12. La pièce de basculement 4 comprend dans sa partie inférieure une patte de verrouillage 15, dont la tête 16 vient coopérer dans la position de verrouillage montrée à la figure 1, avec un élément d'appui 17 solidaire de la carrosserie 3. Dans une telle position de verrouillage, l'engagement de la tête 16 sur l'élément d'appui 17 crée une force de compression F sensiblement normale au couvercle 1, appliquant la paroi interne 5 sur le bord périphérique 18 de la cuve interne 19 du récipient par l'intermédiaire d'un joint d'étanchéité 20.

Lorsque l'utilisateur veut déverrouiller le couvercle 1, il presse manuellement le bouton 14 qui déclenche le basculement de la pièce de basculement 4 de la position A à la position B. Dans cette position, la tête 16 n'est plus en appui réactif contre l'élément d'appui 17 et le couvercle 1 est déverrouillé.

Un tel dispositif peut être considéré comme remplissant correctement la double fonction de verrouillage-déverrouillage qui lui est dévolue, mais il a été constaté que la sécurité de l'utilisateur n'était pas parfaite. En effet, pour pouvoir presser le bouton 14, l'utilisateur doit positionner sa main au-dessus du récipient 2, et dès le début du déverrouillage, la vapeur s'échappe entre le joint 20 et le bord périphérique 18 et sort à l'extérieur dans une zone à la jonction entre le couvercle 1 et la carrosserie 3. Cette émission de vapeur débute alors même que le déverrouillage est incomplet, et pendant un court intervalle de temps la main de l'utilisateur peut être amenée à se trouver sur le chemin de l'émission de vapeur. Une telle situation est manifestement à éviter pour des raisons évidentes de sécurité. Il doit également être remarqué, que la position du bouton 4 en partie haute du récipient 2 n'est pas à même de conférer à l'appareil une bonne stabilité au moment de sa pression puis de l'ouverture du couvercle, alors même que l'utilisateur peut être tenté de réagir brusquement à un jet de vapeur s'échappant de l'appareil. Enfin, il est à noter que lors de l'utilisation d'un dispositif antérieur tel que montré à la figure 1, la séparation du couvercle 1 de la carrosserie 3 n'est pas suffisamment dynamique malgré la présence de ressorts séparateurs 21. Ainsi, en cas d'adhérence du joint d'étanchéité 20 sur le rebord 18, le couvercle peut demeurer fermé ou s'ouvrir difficilement, et, l'utilisateur ne dispose alors d'aucun moyen efficace d'ouverture. On connait également d'après le document GB-A-2151128 un dispositif de verrouillage correspondant au préambule de la revendication indépendante 1.

L'objet de l'invention vise en conséquence à rémédier aux différents inconvénients énumérés ci-dessus et à fournir un dispositif de verrouillage-déverrouillage assurant à l'utilisateur un déverrouillage simple et sûr du couvercle, sans risque de brûlure.

Un objet complémentaire de l'invention vise à fournir un dispositif de verrouillage-déverrouillage n'affectant pas de manière négative la stabilité de l'appareil lors du déverrouillage et de l'ouverture du couvercle.

Un autre objet complémentaire de l'invention vise à fournir un dispositif de verrouillage-déverrouillage capable d'assurer une ouverture dynamique du couvercle en toutes conditions d'utilisation de l'appareil.

Les buts assignés à l'invention sont atteints à l'aide d'un dispositif de verrouillage-déverrouillage du couvercle d'un appareil de cuisson par rapport à sa carrosserie selon la revendication 1.

D'autres particularités et avantages de l'invention apparaitront et ressortiront plus en détail à la lecture de la description faite ci-après, en référence aux dessins annexés, donnés à titre d'exemples illustratifs non limitatifs dans lesquels :
- La figure 1 représente selon une vue en coupe transversale, un dispositif de verrouillage-déverrouillage de l'art antérieur ;
- La figure 2 représente selon une vue en perspective partielle, les principaux éléments constituant le dispositif de verrouillage-déverrouillage conforme à l'invention ;
- La figure 3 montre selon une vue en coupe transversale, le dispositif de verrouillage-déverrouillage conforme à l'invention en position de déverrouillage ;
- La figure 4 montre selon une vue en coupe transversale, le même dispositif que celui de la figure 3, mais en position de verrouillage.

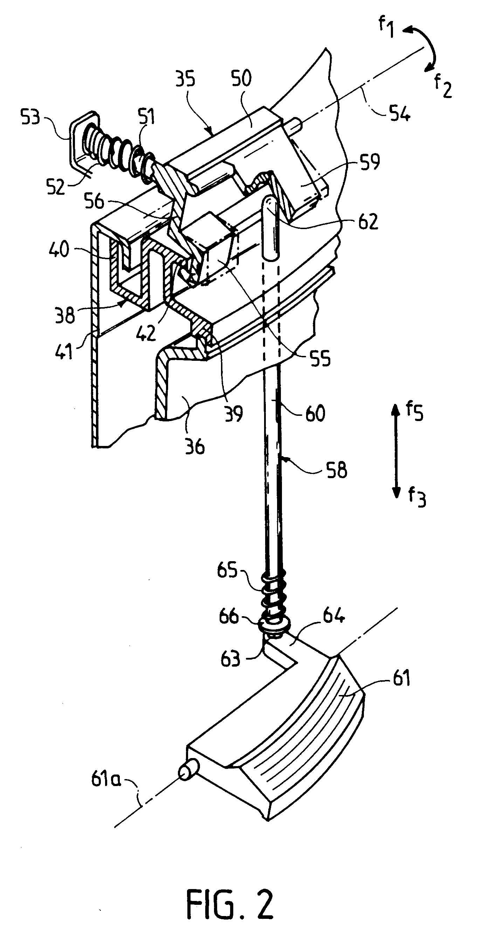

Le dispositif de verrouillage-déverrouillage conforme à l'invention montré aux figures 2 à 4 est destiné à assurer le verrouillage et le déverrouillage du couvercle 30 d'un appareil de cuisson 31 sur sa carrosserie 32. De manière connue en soi, l'appareil de cuisson 31, d'un type produisant de la vapeur, comporte un couvercle 30 limité par une face interne 33 supportant un joint d'étanchéité 33a, et par une face externe 34 s'étendant à distance l'une de l'autre et entre lesquelles est disposée une pièce de basculement 35. La carrosserie 32 est constituée d'un ensemble d'éléments formant coque 36, 37, assemblés entre eux pour former le corps principal de la carrosserie 32, dont la partie supérieure supporte une pièce d'appui périphérique 38. Cette dernière repose par une gorge périphérique externe 39 sur la carrosserie 32 et supporte par son rebord périphérique interne 40 la cuve de cuisson 41 de l'appareil. Approximativement dans sa partie médiane, la pièce d'appui périphérique 38 comporte un élément d'appui 42 s'étendant sensiblement parallèlement au plan d'extension du couvercle 30, pour définir une face d'appui inférieure 43.

La pièce de basculement 35 est logée et montée dans l'épaisseur du couvercle 30 au niveau de sa partie périphérique venant surplomber la carrosserie 32 dans la position de fermeture du couvercle 30. La pièce de basculement 35 comprend un corps principal 50 à partir duquel s'étend en direction de l'intérieur de l'appareil un téton 51 sur lequel est enroulé et bloqué par une extrémité un ressort de compression 52 en appui par son autre extrémité contre un élément de blocage 53 solidaire du couvercle 30 et situé en regard du téton 51 (figure 2). La pièce de basculement 35 est montée mobile par rapport au couvercle 30, par tous moyens connus, et par exemple par montage en rotation autour d'un axe 54, s'étendant sensiblement perpendiculairement à l'axe du téton 51. Le montage est tel que la pièce de basculement 35 est mobile en rotation autour de l'axe 54 selon l'une des directions F1, F2, ladite pièce étant montée élastiquement par l'intermédiaire du ressort 52, de manière à occuper une position stable de rappel, illustrée en traits pleins à la figure 2 dans laquelle le ressort 52 n'est pas complétement comprimé et s'étend hors de son axe longitudinal normal de compression. La pièce de basculement 35, peut occuper une seconde position de basculement, dite instable, illustrée à la figure 2 par les traits discontinus et correspondant à une compression du ressort 52 selon son axe longitudinal. Ces deux positions extrêmes correspondent au basculement de la pièce de basculement 35.

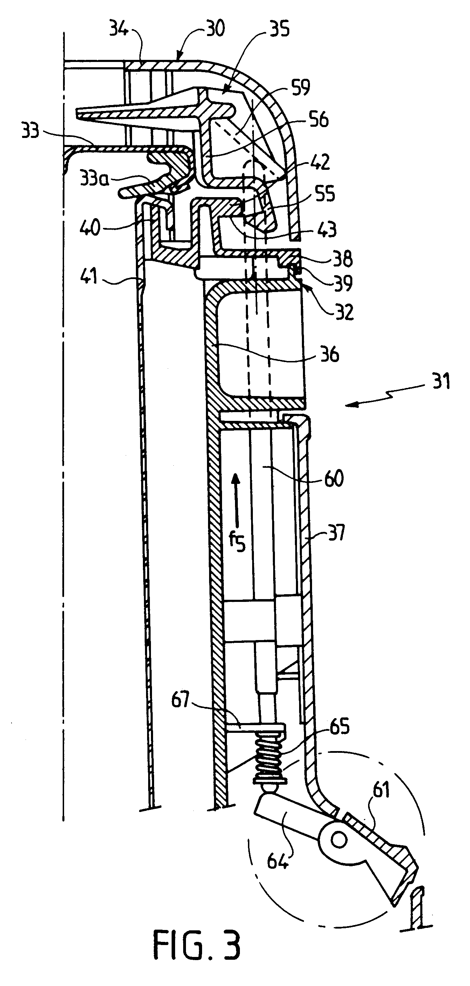

Le corps principal 50 est pourvu d'une patte de verrouillage 55, de section transversale par exemple en U, et reliée à la partie inférieure du corps principal 50 par une branche 56. La patte de verrouillage 55 est destinée à venir coopérer dans la première position stable de la pièce de basculement 35, avec l'élément d'appui 42 dont le profil est adapté, à cet effet, à celui de la patte de verrouillage 55. En particulier, la face d'appui inférieure 43 (figure 3) doit venir en appui contre l'aile inférieure de la patte de verrouillage 55 de manière à assurer le verrouillage du couvercle 30 sur la cuve 41 en empêchant tout mouvement relatif de ces deux pièces selon une direction normale au plan d'extension du couvercle 30.

Le dispositif de verrouillage-déverrouillage selon l'invention comprend également un organe d'actionnement 58 constitué d'un doigt d'actionnement 59, formant de préférence une surface inclinée s'étendant en direction du fond de la carrosserie à partir du corps principal 50 ainsi qu'une tige d'actionnement 60 montée librement coulissante selon son axe longitudinal, dans la coque de la carrosserie 32 et le long de cette dernière. L'organe d'actionnement est complété par une pièce de manoeuvre 61 constituant l'extrémité inférieure de l'organe d'actionnement 58 et s'étendant sous la zone de jonction entre le couvercle 30 et la carrosserie 32. Avantageusement, la pièce de manoeuvre 61, est une manette intégrée dans la carrosserie 32 et est montée à rotation sur cette dernière autour d'un axe 61a, sensiblement tangent à l'enveloppe externe de la carrosserie 32. La face inférieure du doigt 59 forme une surface d'engagement pour l'extrémité supérieure 62 de la tige 60, dont l'extrémité inférieure 63 engage un levier 64 solidaire de la pièce de commande 61. Avantageusement la tige 60 est rappelée élastiquement selon la flèche f3 dans une position stable basse dans laquelle l'extrémité supérieure 62 ne sollicite pas le doigt 59. Un tel montage élastique peut être réalisé en montant un ressort 65 de manière concentrique autour de la tige 60, en appui contre une rondelle 66 bloquée en position à l'extrémité de la tige 60 et contre un bras 67 solidaire de la carrosserie 32 et à travers lequel coulisse la tige 60.

Le fonctionnement du dispositif de verrouillage-déverrouillage conforme à l'invention est le suivant.

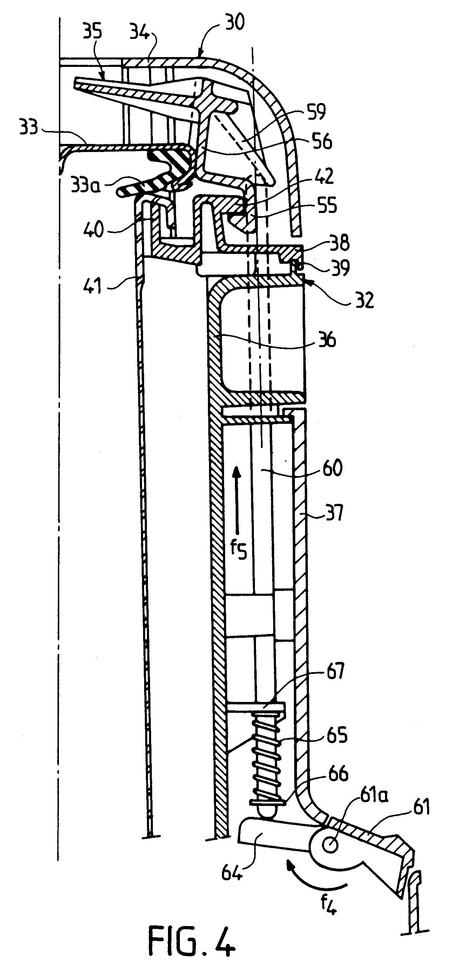

En considérant le dispositif dans sa position de verrouillage montré à la figure 4, l'utilisateur va assurer la mise en action de la pièce de basculement 35 en actionnant par pression la manette 61 pour faire pivoter cette dernière autour de l'axe 61a selon la flèche f4. Ce pivotement permet au bras 64 d'actionner la tige 60 en comprimant le ressort 65 et de faire coulisser la tige 60 selon la flèche f5 jusqu'à ce que l'extrémité supérieure 62 engage le doigt 59 et assure le basculement de la pièce de basculement 35 autour de son axe de basculement selon la flèche f1. Au cours de son basculement, la patte de verrouillage 55 libère progressivement la face d'appui 43, pour venir occuper sa seconde position instable de déverrouillage montrée à la figure 3. Dans cette position le couvercle 30 est complètement déverrouillé et le joint d'étanchéité 33a n'est plus comprimé, permettant ainsi à la vapeur de s'échapper au niveau de la zone jonction entre le couvercle 30 et la carrosserie 32.

Dès que l'utilisateur relache sa pression sur la pièce de manoeuvre 61, la tige 60 revient, sous l'action du ressort 65 dans sa position de rappel élastique comme montré à la figure 4 et la pièce de basculement 35, qui n'est plus sollicitée revient également dans sa position stable de verrouillage, par exemple en appui par sa branche 56 contre le bord de la face interne 33.

La position de la pièce de manoeuvre 61 sous la zone de jonction permet à l'utilisateur de positionner et de maintenir sa main dans une zone exempte de jet de vapeur, ce qui constitue un facteur de sécurité important. En outre, le montage proposé donne la possibilité de disposer la pièce de manoeuvre 61 dans la partie basse le long de l'appareil, ce qui assure une meilleure stabilité à l'ensemble lors de l'opération de déverrouillage, contribuant ainsi à renforcer la sécurité et éviter le renversement. Il convient enfin de noter que l'engagement du doigt 59 par la tige 60 selon la direction f5 fournit une poussée sensiblement dirigée selon la même direction qui initie l'ouverture du couvercle 30 de manière dynamique et prévient une éventuelle adhérence du joint 33a sur le rebord de la cuve 41.

L'invention n'est pas limitée aux exemples décrits, et il est en particulier ensivageable d'avoir recours à un doigt d'actionnement 59 d'inclinaison variable et même sensiblement normal à la branche 56.

A titre de variante, il est également possible de loger la pièce de basculement 35, non plus dans l'épaisseur du couvercle 30, mais dans la carrosserie 32 de l'appareil. Dans une telle disposition (non représentée aux figures), le basculement de la pièce 35 est inversé et la patte de verrouillage 55 est destinée à coopérer avec une pièce d'appui 38, solidaire du couvercle 30.

L'appareil de cuisson conforme à l'invention peut être constitué d'une friteuse.

## Revendications

1. Dispositif de verrouillage-déverrouillage du couvercle (30) d'un appareil de cuisson (31) par rapport à sa carrosserie (32), comportant une pièce de basculement (35), montée élastiquement dans une première position stable de verrouillage et susceptible par basculement d'occuper une deuxième position instable de déverrouillage, ladite pièce de basculement comprenant une patte de verrouillage (55) destinée à venir coopérer, dans la première position, avec une pièce d'appui (38), de profil adapté, pour assurer le verrouillage, une pièce de manoeuvre (61) située sous la zone de jonction entre le couvercle (30) et la carrosserie (32), caractérisé en ce qu'un organe d'actionnement (58) est disposé entre d'une part la pièce de basculement (35) et d'autre part ladite pièce de manoeuvre (61), ledit organe d'actionnement s'étendant sensiblement le long de la carrosserie (32), et étant susceptible de s'engager avec la pièce de basculement (35) et la pièce de manoeuvre (61) de façon à faire basculer la pièce (35) lorsque la pièce de manoeuvre (61) est actionnée.

2. Dispositif de verrouillage-déverrouillage selon la revendication 1, dans lequel la pièce de manoeuvre est disposée dans la partie basse de la carrosserie (32).

3. Dispositif de verrouillage-déverrouillage selon l'une des revendications 1 ou 2, dans lequel la pièce de basculement (35) est logée dans la carrosserie (32) et la pièce d'appui (38) est solidaire du couvercle (30).

4. Dispositif de verrouillage-déverrouillage selon l'une des revendications 1 ou 2, dans lequel la pièce de basculement (35) est logée dans le couvercle (30) et la pièce d'appui (38) est solidaire de la carrosserie (32).

5. Dispositif de verrouillage-déverrouillage selon l'une des revendications 1 à 4, dans lequel l'organe d'actionnement (58) comporte une tige d'actionnement (60) montée coulissante selon son axe longitudinal sur la carrosserie (32), la tige (60) étant susceptible par coulissement de s'engager par son extrémité supérieure (62) avec a pièce de basculement (35) et par son extrémité inférieure (63) avec la pièce de manoeuvre (61).

6. Dispositif de verrouillage-déverrouillage selon la revendication 5, dans lequel l'extrémité supérieure (62) engage un doigt d'appui (59) solidaire de la pièce de basculement (35).

7. Dispositif de verrouillage-déverrouillage selon l'une des revendications précédentes, dans lequel le doigt d'appui (59) comporte une face d'appui inclinée s'étendant vers le fond de la carrosserie (32) à partir de la pièce de basculement (35), ladite face d'appui étant engagée par la tige d'actionnement (60).

8. Dispositif de verrouillage-déverrouillage selon la revendication 7, dans lequel la pièce de manoeuvre (61) est une manette montée mobile en rotation sur la carrosserie (32) et comporte un lever d'engagement (64) de l'extrémité inférieure (63) de la tige (60).

9. Dispositif de verrouillage-déverrouillage selon l'une des revendications précédentes, dans lequel la tige (60) est montée en position de rappel élastique contre le levier d'engagement (64) pour dégager la pièce de basculement (35).

10. Dispositif de verrouillage-déverrouillage selon la revendication 9, dans lequel la tige est montée en position de rappel élastique à l'aide d'un ressort de compression (65), enfilé sur la tige (60) à son extrémité inférieure (63).

11. Appareil de cuisson comportant un dispositif de verrouillage-déverrouillage conforme à l'une des revendications 1 à 10.

12. Appareil selon la revendication 11 caractérisé en ce qu'il est constitué d'une friteuse.

## Claims

1. A locking and unlocking device for locking and unlocking the cover (30) of a cooking appliance (31) relative to its body (32), the device comprising a tilting part (35) resiliently mounted in a locking first position that is stable and capable of being tilted to occupy an unlocking second position that is unstable, said tilting part comprising a latch (55) designed to co-operate, in the first position, with a catch (38) of appropriate shape for achieving locking, and a control part (61) situated beneath the junction zone between the cover (30) and the body (32), the device being characterized in that an actuator member (58) is disposed between the tilting part (35) and said control part (61), said actuator member extending substantially along the body (32) and being suitable for engaging with the tilting part (35) and the control part (61) so as to cause the part (35) to tilt when the control part (61) is actuated.

2. A locking and unlocking device according to claim 1, in which the control part is disposed in the bottom portion of the body (32).

3. A locking and unlocking device according to claim 1 or 2, in which the tilting part (35) is housed in the body (32) and the catch (38) is secured to the cover (30).

4. A locking and unlocking device according to claim 1 or 2, in which the tilting part (35) is housed in the cover (30) and the catch (38) is secured to the body (32).

5. A locking and unlocking device according to any one of claims 1 to 4, in which the actuator member (58) comprises an actuator rod (60) mounted to slide along its own longitudinal axis on the body (32), the rod (60) being capable by sliding of engaging its top end (62) with the tilting part (35) and its bottom end (63) with the control part (61).

6. A locking and unlocking device according to claim 5, in which the top end (62) engages a thrust finger (59) secured to the tilting part (35).

7. A locking and unlocking device according to any preceding claim, in which the thrust finger (59) includes an inclined thrust face projecting from the tilting part (35), towards the bottom of the body (32), said thrust face being engaged by the actuator rod (60).

8. A locking and unlocking device according to claim 7, in which the control part (61) is a handle mounted to move in rotation on the body (32) and including a lever (64) for engaging the bottom end (63) of the rod (60).

9. A locking and unlocking device according to any preceding claim, in which the rod (60) is mounted in a resilient return position against the engagement lever (64) for disengaging the tilting part (35).

10. A locking and unlocking device according to claim 9, in which the rod is mounted in the resilient return position by means of a compression spring (65) engaged around the bottom end (63) of the rod (60).

11. A cooking appliance including a locking and unlocking device according to any one of claims 1 to 10.

12. An appliance according to claim 11, characterized in that it is constituted by a deep fryer.

## Patentansprüche

1. Verriegelungs- und Entriegelungsvorrichtung für Deckel (30) gegenüber dem Topf (32) von Kochapparaten (31), mit einem Kippglied (35), welches federnd elastisch in einer ersten stabilen Verriegelungsstellung angeordnet ist und durch eine Kippbewegung in eine zweite instabile Entriegelungsstellung verschwenkt werden kann und welches einen Verriegelungshaken (55) aufweist, wobei letzterer in der ersten Stellung mit einem Stützte (38) entsprechender Ausgestaltung zwecks Verriegelung zusammenwirkt, und wobei ein unterhalb des Verbindungsbereichs zwischen dem Deckel (30) und dem Topf (32) angeordnetes Steuerelement (61) vorgesehen ist, dadurch gekennzeichnet, daß zwischen dem Kippglied (35) und dem Steuerelement (61) ein Betätigungsorgan (58) angeordnet ist, wobei sich das Betätigungsorgan annähernd dem Topf (32) entlang erstreckt und mit dem Kippglied (35) und dem Steuerelement (61) zusammenwirkt, so daß bei Betätigung des Steuerelements (61) die Schwenkbewegung des Kippglieds (35) bewirkt wird.

2. Verriegelungs- und Entriegelungsvorrichtung nach Anspruch 1, bei welcher das Steuerelement (61) im unteren Bereich des Topfs (32) angeordent ist.

3. Verriegelungs- und Entriegelungsvorrichtung nach Anspruch 1 oder 2, bei weicher das Kippglied (35) im Topf (32) untergebracht ist und das Stützteil (38) mit dem Deckel (30) verbunden ist.

4. Verriegelungs- und Entriegelungsvorrichtung nach einem der Ansprüche 1 oder 2, bei welcher das Kippteil im Deckel (30) untergebracht ist und das Stützte (38) mit dem Topf (32) verbunden ist.

5. Verriegelungs- und Entriegelungsvorrichtung nach einem der Ansprüche 1 bis 4, bei welcher das Betätigungsorgan (58) eine Betätigungsstange (60) umfaßt, wobei letztere gemäß ihrer Längsachse gleitend auf dem Topf (32) angeordnet ist und bei der Gleitbewegung mit ihrem oberen Ende (62) das Kippteil (35) und mit ihrem unteren Ende (63) das Steuerelement (61) betätigt.

6. Verriegelungs- und Entriegelungsvorrichtung nach Anspruch 5, bei welcher das obere Ende (62) der Betätigungsstange einen mit dem Kippteil (35) verbundenen Stützzapfen (59) betätigt.

7. Verriegelungs- und Entriegelungsvorrichtung nach einem der vorangehenden Ansprüche, bei welcher der Stützzapfen (59) eine ausgehend vom Kippteil (35) gegen den Boden des Topfs (32) hin geneigte, mit der Betätigungsstange (60) zusammenwirkende Stützfläche aufweist.

8. Verriegelungs- und Entriegelungsvorrichtung nach Anspruch 7, bei welcher das Steuerelement (61) durch einen drehbeweglich auf dem Topf (32) angeordneten Handgriff gebildet wird und einen Hebel (64) zur Betätigung des unteren Endes (63) der Stange (60) aufweist.

9. Verriegelungs- und Entriegelungsvorrichtung nach einem der vorangehenden Ansprüche, bei welcher zur Freigabe des Kippglieds (35) die Betätigungsstange (60) in federnd elastischer Rückstellage unter Abstützung gegen den Betätigungshebel (64) angeordnet ist.

10. Verriegelungs- und Entriegelungsvorrichtung nach Anspruch 9, bei welcher die Betätigungsstange (64) mittels einer auf das untere Ende (63) der Betätigungsstange (60) aufgesetzten Druckfeder (65) in federnd elastischer Rückstellage angeordnet ist.

11. Kochapparat mit einer Verriegelungs- und Entriegelungsvorrichtung gemäß einem der Ansprüche 1 bis 10.

12. Kochapparat nach Anspruch 11, dadurch gekennzeichnet, daß er durch eine Friteuse gebildet wird.
